# FASCICULE DE BREVET EUROPEEN

(11) **EP 0 910 753 B1**
(45) Date de publication et mention de la délivrance du brevet: **28.05.2003**
(21) Numéro de dépôt: 98920579.4
(22) Date de dépôt: 07.04.1998
(51) Int. Cl.: F16D 13/50, F16D 13/58, F16D 13/75

(54) **MECANISME D'EMBRAYAGE POUR EMBRAYAGE A FRICTION A FAIBLE EFFORT DE DEBRAYAGE, NOTAMMENT POUR VEHICULES AUTOMOBILES**
KUPPLUNGSMECHANISMUS MIT GERINGEM LÖSEKRAFTBEDARF FÜR EINE KRAFTFAHRZEUG-REIBKUPPLUNG
CLUTCH MECHANISM FOR FRICTION CLUTCH WITH LOW DECLUTCHING FORCE, IN PARTICULAR FOR MOTOR VEHICLES

(30) Priorité: 07.04.1997 FR 9704214
(43) Date de publication de la demande: 28.04.1999
(73) Titulaire: VALEO EMBRAYAGES, 80009 Amiens Cedex 1 (FR)
(72) Inventeur: BLARD, Michel, F-92130 Issy-les-Moulineaux (FR); MINEREAU, Hugues, F-93240 Stains (FR)
(74) Mandataire: Gamonal, Didier
(86) Numéro de dépôt international: FR9800699
(87) Numéro de publication internationale: WO98045612

(56) Documents cités:
- WO-A-98/10201
- DE-A- 4 311 286
- FR-A- 2 739 159
- GB-A- 943 039

## Description

La présente invention concerne les embrayages à friction à faible effort de débrayage, notamment pour véhicules automobiles, et se rapporte plus particulièrement au mécanisme d'embrayage que comporte un tel embrayage.

Ainsi qu'on le sait, dans un embrayage classique intercalé entre un arbre menant et un arbre mené, un diaphragme prend appui sur le fond d'un couvercle, fixé à un volant d'entraînement en rotation, pour déplacer un plateau de pression en direction dudit volant, formant plateau de réaction, afin de serrer les garnitures de friction d'une friction d'embrayage entre lesdits plateaux de pression et de réaction.

Le volant d'entraînement est solidaire en rotation d'un premier arbre, tel qu'un arbre menant, tandis que la friction d'embrayage présente à sa périphérie interne un moyeu pour son calage en rotation sur un deuxième arbre, tel qu'un arbre mené.

L'embrayage est donc normalement engagé, ou embrayé, avec transmission de couple entre les arbres menant et mené.

Pour désengager, ou débrayer, l'embrayage, il faut, à l'aide d'une butée de débrayage, agir axialement en poussant, dans le cas d'un embrayage du type poussé, sur l'extrémité interne des doigts du diaphragme pour faire pivoter ledit diaphragme et annuler l'effort qu'exerce ce diaphragme sur le plateau de pression mobile axialement afin de libérer les garnitures de friction. Le couple n'est alors plus transmis de l'arbre menant à l'arbre mené, car les garnitures de friction ne sont plus serrées entre les plateaux de pression et de réaction solidaires en rotation du couvercle de forme creuse.

Usuellement, le couvercle, le plateau de pression et le diaphragme forment un ensemble unitaire appelé mécanisme d'embrayage que l'on vient rapporter par son couvercle sur le volant, des languettes élastiques liant en rotation, avec mobilité axiale, le plateau de pression au couvercle.

Le diaphragme, ainsi qu'on le sait, est troué centralement et comporte une partie périphérique externe en forme de rondelle Belleville prolongée vers l'intérieur par une partie centrale fragmentée en doigts radiaux par des fentes. Ce diaphragme, par sa partie rondelle Belleville, prend appui sur le couvercle et sur le plateau de pression. Ainsi, le dispositif débrayeur de l'embrayage, qui permet de contrecarrer à volonté l'action des moyens élastiques embrayeurs, est constitué par les doigts du diaphragme sur l'extrémité interne desquels agit la butée de débrayage, tandis que la rondelle Belleville du diaphragme constitue des moyens élastiques embrayeurs à action axiale pour serrer les garnitures de friction entre les plateaux de pression et de réaction et donc solliciter axialement le plateau de pression en direction opposée au fond du couvercle.

A l'état libre, ce diaphragme a une forme tronconique. Une fois monté dans l'embrayage, sa rondelle Belleville est montée sous précontrainte et est plus ou moins aplatie. Lors de l'opération de débrayage, ou désengagement de l'embrayage, on modifie la conicité de sa rondelle Belleville.

Ainsi qu'on le sait, la courbe caractéristique de ce diaphragme, qui représente la force exercée en fonction de la course de débrayage, par exemple ramenée au niveau de l'extrémité interne des doigts du diaphragme, est déterminée par les dimensions de sa rondelle Belleville, notamment par le rapport entre la hauteur du tronc de cône de la rondelle Belleville à l'état libre et l'épaisseur du diaphragme.

Cette courbe caractéristique passe par un maximum.

Ainsi, la force à exercer sur l'extrémité interné des doigts du diaphragme, pendant l'opération de débrayage, augmente jusqu'à un maximum, diminue graduellement jusqu'à un minimum, puis augmente à nouveau.

La différence entre le maximum et le minimum peut être importante. Pour plus de précisions sur cette courbe caractéristique, on se reportera par exemple au document FR-A-1 392 569 ou au document WO 97/19 275.

Dans le document FR-A-1 392 569, on a prévu un dispositif élastique de progressivité pour éviter de passer par le maximum précité lors de la course de débrayage. Ce dispositif est monté en série avec la rondelle Belleville du diaphragme et présente une force élastique notablement inférieure à celle de la rondelle Belleville. Ce dispositif a une course limitée entre une position de précontrainte où sa force est maximum et une position de contrainte où sa force est minimum.

Avec cette disposition, on obtient un effort de débrayage globalement croissant au niveau de la butée de débrayage.

On ne peut obtenir lors de la course de débrayage une assistance aussi grande que souhaitée, le dispositif de progressivité diminuant la charge exercée par le diaphragme sur le plateau de pression lors du débrayage.

Les courbes de charge du dispositif de progressivité et du diaphragme ont des formes ne permettant pas de les combiner pour obtenir une forte assistance au débrayage, en particulier si l'on veut respecter des courses et efforts de débrayages compatibles avec les commandes de débrayage actuelles. Par ailleurs, la forme de la courbe du dispositif de progressivité évolue très rapidement avec la vie de l'embrayage, ceci annulant d'autant plus l'assistance au débrayage que le niveau d'assistance demandé est élevé. Pour éviter le vieillissement de la courbe du dispositif d'assistance, il est préférable de placer celui-ci en un endroit où sa courbe de raideur restera stable dans le temps, et, en particulier, en un endroit placé en dehors de la zone de progressivité de la friction où le contact garnitures et le phénomène d'incrustations évoluent et font évoluer la courbe de progressivité.

On peut alors songer à faire intervenir un ressort d'assistance en parallèle avec le diaphragme. Dans ce cas, le ressort d'assistance, par exemple en forme de rondelle Belleville, peut prendre appui sur le couvercle et sur l'extrémité interne des doigts du diaphragme.

En position embrayage engagé, il peut alors exercer une force minimum, puis, sa conicité variant, exercer une force d'assistance lors de l'opération de débrayage. Il faut donc que cette force d'assistance soit minimum en position embrayage engagé tout au long de la durée de vie de l'embrayage.

L'idéal pour ce type de réalisation est de faire appel à un dispositif de réglage, dit dispositif de rattrapage d'usure, qui maintient le diaphragme toujours globalement dans la même position, quelle que soit l'usure des garnitures de friction de l'embrayage et/ou des faces de friction des plateaux de pression et de réaction, pour que le ressort d'assistance exerce, en toute circonstance lors de la durée de vie de l'embrayage, une très faible force lorsque l'embrayage est en position engagée ou embrayée.

Dans le certificat d'addition 86 983 au brevet français 1 392 569, ainsi que dans le document GB-A-943.039, on a déjà proposé d'interposer, entre la rondelle élastique du diaphragme et le plateau de pression, une rondelle élastique auxiliaire, lesdites deux rondelles élastiques étant placées en série; la rondelle élastique auxiliaire permet une certaine progressivité de l'engagement de l'embrayage et procure un certain effort d'assistance lors de son désengagement.

La présente invention a pour objet de créer, de manière simple et économique, un embrayage à friction à faible effort de débrayage faisant appel également à des ressorts agissant en série sans diminuer notablement, tout au long de la durée de vie de l'embrayage, la force de serrage des garnitures de friction à l'état embrayage engagé, grâce à la présence d'un dispositif de rattrapage d'usure.

Ainsi, selon l'invention, un mécanisme d'embrayage pour embrayage à friction, notamment pour véhicules automobiles, comportant un couvercle de forme creuse avec un fond d'orientation transversale et des moyens de fixation pour fixation du mécanisme d'embrayage sur un volant d'entraînement en rotation, un plateau de pression présentant frontalement une face de friction pour coopération avec une friction d'embrayage, des languettes élastiques pour liaison en rotation, avec mobilité axiale, du plateau de pression avec le couvercle, et, interposés entre la face dorsale du plateau de pression et le fond du couvercle, d'une part, des moyens élastiques embrayeurs à action axiale sollicitant axialement le plateau de pression en direction opposée du fond du couvercle et, d'autre part, un dispositif débrayeur pour contrecarrer à volonté l'action dèsdits moyens élastiques embrayeurs, est caractérisé par le fait que lesdits moyens élastiques embrayeurs comportent deux rondelles Belleville montées en série entre le plateau de pression et le couvercle, lesdites rondelles étant inclinées en sens inverse, le mécanisme étant équipé d'un dispositif de rattrapage d'usure d'au moins des garnitures de la friction d'embrayage actionné par les moyens élastiques embrayeurs, ledit dispositif de rattrapage d'usure comportant des moyens à rampes présentant des rampes disposées circonférentiellement et des zones d'appui, l'une des rondelles Belleville, dite première rondelle Belleville, étant en contact avec les zones d'appui, tandis que l'autre des rondelles Belleville, dite seconde rondelle Belleville, s'appuie sur le couvercle.

Avantageusement, la première rondelle est en contact par sa périphérie externe avec les zones d'appui tandis que la seconde rondelle s'appuie par sa périphérie externe sur le couvercle; des moyens de transmission d'effort sont intercalés entre les périphéries internes des première et seconde rondelles Belleville, les moyens de transmission d'effort étant portés par le dispositif débrayeur.

En variante, la première rondelle est en contact par sa partie médiane avec les zones d'appui tandis que la seconde rondelle s'appuie par sa périphérie interne sur le couvercle.

En variante, la première rondelle est en contact par sa périphérie interne avec les zones d'appui tandis que la seconde rondelle s'appuie par sa périphérie interne sur le couvercle.

Avantageusement, le dispositif de rattrapage d'usure est actionné par la première rondelle Belleville.

De préférence, le fond du couvercle porte uné butée pour limiter l'inclinaison de la seconde rondelle Belleville.

S'agissant des variantes dans lesquelles la seconde rondelle s'appuie sur le couvercle par sa périphérie interne, avantageusement le dispositif de rattrapage d'usure est actionné par la seconde rondelle Belleville ; de préférence, la seconde rondelle Belleville est la partie périphérique externe d'un diaphragme prolongée vers l'intérieur par une partie centrale fragmentée en doigts radiaux par des fentes.

S'agissant également des variantes ci-dessus, de préférence des moyens de transmission d'effort sont intercalés encre les périphéries externes des première et seconde rondelles Belleville ; le dispositif de rattrapage d'usure est actionné par les moyens de transmission d'effort.

Avantageusement, compte tenu de la présence de moyens élastiques de progressivité interposés entre les garnitures de frictions de la friction d'embrayage, la seconde rondelle Belleville est choisie pour exercer une action prépondérante par rapport à la première rondelle Belleville ; la raideur de la seconde rondelle Belleville est supérieure à la raideur de la première rondelle Belleville.

De préférence, la seconde rondelle Belleville développe une charge maximum supérieure en valeur absolue à celle développée par la première rondelle Belleville.

De préférence, comme décrit dans le document WO 97/19275 (figure 4), la rondelle Belleville, qui agit sur le dispositif de rattrapage d'usure, est une rondelle Belleville négative ; la charge qu'elle fournie diminuant lorsque la hauteur de son tronc de cône diminue puis augmente - tandis que l'autre rondelle Belleville est une rondelle positive ; la charge qu'elle fournie augmentant lorsque la hauteur de son tronc de cône diminue.

On utilise donc la rondelle positive, formant rondelle d'assistance, entre l'origine et le maximum de la courbe caractéristique d'une rondelle Belleville et la rondelle Belleville négative, formant rondelle de serrage, au delà dudit maximum.

La description qui va suivre illustre l'invention en regard des dessins annexés dans lesquels :
- la figure 1 est une demi-vue en coupe axiale d'un embrayage selon l'invention en position embrayage engagé ;
- la figure 2 est une demi-vue en coupe axiale de l'embrayage de la figure 1 montrant le dispositif de rattrapage d'usure dont il est équipé ;
- la figure 3 est une demi-vue en coupe axiale montrant une variante d'embrayage selon l'invention ;
- la figure 4 est une demi-vue en coupe axiale montrant encore une autre variante d'embrayage selon l'invention.

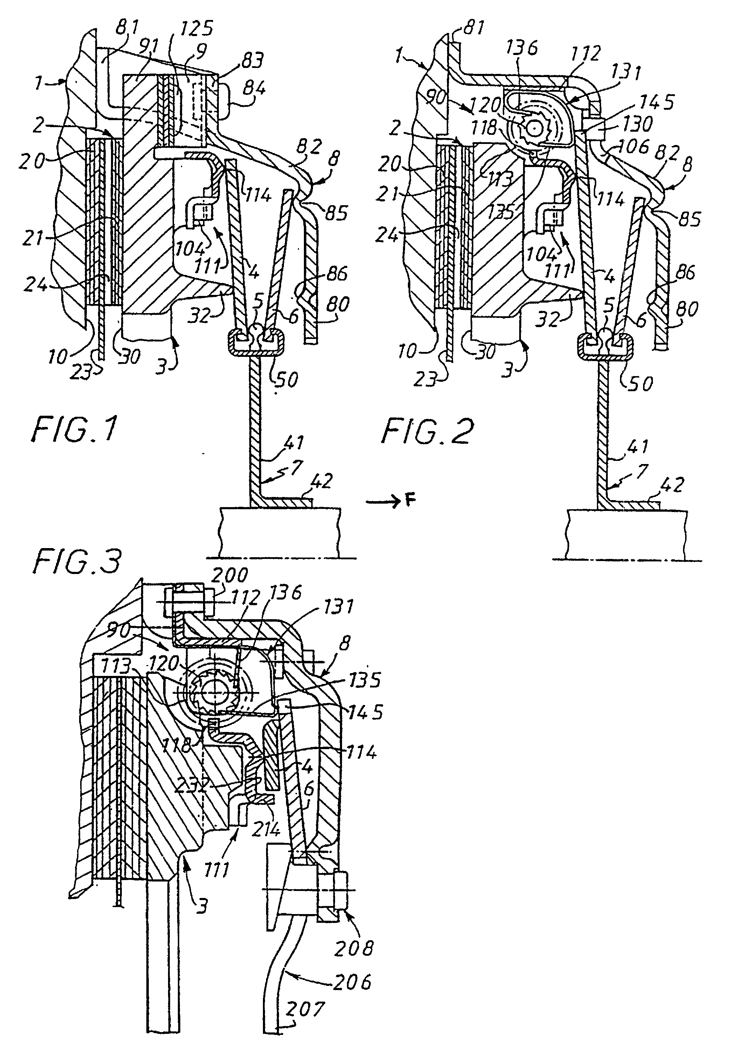

L'embrayage, représenté sur la figure 1, comporte un ensemble de pièces de forme annulaire, à savoir successivement axialement un volant 1 d'entraînement en rotation pour fixation de l'embrayage à un premier arbre, tel qu'un arbre menant, une friction d'embrayage 2 présentant à sa périphérie externe des garnitures de friction 20, 21 et à sa périphérie interne un moyeu non représenté pour liaison en rotation de l'embrayage avec un second arbre tel qu'un arbre mené, un plateau de pression 3, une première rondelle Belleville 4, un jonc d'appui 5, une seconde rondelle Belleville 6 inclinée en sens inverse par rapport à la première rondelle Belleville 4, un dispositif débrayeur 7, un couvercle 8 de forme creuse présentant un fond 80 globalement d'orientation transversale troué centralement et, à sa périphérie externe, des moyens de fixation 81 pour fixation du couvercle 8 au volant 1 formant plateau de réaction.

Le volant 1 présente dorsalement une face de friction 10 et est représenté ici partiellement, sachant que de manière connue il présente centralement des trous pour sa fixation à l'aide de vis à l'arbre menant. Ici le volant 1 est d'un seul tenant en étant en matière moulable tout comme le plateau de pression 3 qui présente frontalement une face de friction 30 en regard de la face de friction 10 du volant 1.

Le volant 1 et le plateau de pression 3 sont ici en fonte.

La friction d'embrayage 2 présente également un disque de support 23 pour porter les garnitures de friction 20, 21, éventuellement fractionnées. Ces garnitures 20, 21 s'étendent de part et d'autre du disque de support 23 en étant fixées à celui-ci par exemple par rivetage. Ici, les garnitures 20, 21 sont fixces par collage ou brasage au disque de support 23 métallique.

De manière connue, des moyens élastiques de progressivité 24 à action axiale sont interposés entre les deux garnitures 20, 21 pour serrage progressif de celles-ci entre le volant 1 et le plateau de pression 3. Ces moyens peuvent avoir toute forme appropriée. Ici, ces moyens 24 sont réalisés en conformant le disque de support 23. Ce disque, à titre non limitatif, peut présenter une partie centrale pour sa liaison, de manière élastique ou non, au moyeu et une partie périphérique fragmentée en paies radiales, par exemple du type tripode. Chaque pale présente alors une zone centrale de portée destinue à la fixation de l'une des garnitures de friction 20, 21 et deux zones périphériques externes de portée destinées à coopérer avec l'autre des garnitures de friction 20, 21.

Les zones de portée sont décalées axialement par rapport à la partie centrale du disque 23, la zone centrale de portée, de grande étendue, étant reliée à ladite partie centrale par un pli tangentiel, tandis que les zones de portées périphériques sont reliées à ladite zone centrale de portée par des plis obliques Pour plus de précisions, on se reportera au document US-A-5 452 783 montrant également un mode de réalisation avec des garnitures de friction fractionnées en plots. Les garnitures de friction peuvent être fixées par rivetage et/ou collage sur les zones centrales de portée.

comme mentionné ci-dessus, le disque 23 peut être accouplé de manière élastique au moyeu. En variante, le disque 23 est accouplé de manière rigide au moyeu, le volant 1 étant alors divisé pour présenter deux masses accouplées de manière élastique entre elles par des ressorts à action circonférentielle ou radiale.

En variante, le volant 1 peut être en deux parties et comporter un flasque de support fixé à sa périphérie interne à l'arbre menant et à sa périphérie externe à un plateau dé réaction présentant la face de friction 10. Le couvercle 8 peut être alors assemblé au volant 1 en deux parties à l'aide de pattes d'orientation axiale issues de sa jupe périphérique cylindrique 82. Ces pattes, en forme de tenons, sont alors engagées dans des mortaises formées à la périphérie externe du plateau de réaction ou du flasque de support. Le tronçon libre des pattes, formant les moyens de fixation 81 précités du couvercle 8, peut être fixé par sertissage, rabattement ou soudage, au flasque ou au plateau de réaction, comme décrit par exemple dans le document FR-A-2.741.917.

Ici, le couvercle 8 a une forme classique et les moyens de fixation 81 consistent en un rebord radial du couvercle 8, dirigé radialement en direction opposée à l'axe de symétrie axial de l'embrayage, ledit rebord 81 étant doté de trous non visibles pour montage d'organes de fixation du rebord 81 au volant 1, tels que des vis ou, en variante, des rivets.

S'agissant d'une application pour véhicule automobile, l'arbre menant est ici l'arbre moteur du véhicule sur le vilebrequin duquel se fixe le volant 1, tandis que l'arbre mené consiste en l'arbre d'entrée de la boîte de vitesses.

Bien entendu, il est possible d'inverser les structures, le premier arbre pouvant être un arbre mené et le deuxième arbre un arbre menant.

Sur cette figure, le plateau de pression 3 est lié en rotation avec le couvercle 8 par des languettes élastiques 9 permettant au plateau de pression 3 de se déplacer axialement par rapport au couvercle 8. Le plateau de pression 3 est donc solidaire en rotation du couvercle 8 et du volant 1, tout en étant mobile axialement par rapport à ceux-ci.

Les languettes 9 sont ici d'orientation tangentielle et sollicitent le plateau de pression 3 en direction du fond 80 du couvercle. Ces languettes 9 élastiques sont donc à action axiale et ont une action de rappel. En variante, les languettes peuvent être d'orientation radiale.

Ici, la jupe cylindrique externe 82 du couvercle 8, reliant le fond 80 au rebord radial de fixation 81, est trouée localement pour passage de pattes 91, que présente en saillie radiale le plateau de pression 3. Les languettes 9 tangentielles sont fixées à l'une de leurs extrémités aux pattes 91 et à leur autre extrémité à une plage radiale 83 du couvercle. Ces languettes 9 sont réparties régulièrement circonférentiellement, de manière connue; leur nombre, ainsi que celui des pattes 91, dépend des applications, sachant que, pour les véhicules de tourisme, on fait généralement appel à trois languettes 9 ou groupes de languettes.

La fixation de ces languettes 9 sur les plages 83 et sur les pattes 91 est réalisée à l'aide d'organes de fixation 84, usuellement des rivets, en variante des vis ou des boulons. Ici, on ne voit pas le rivet 84 associé à la patte 91 car celle-ci est large circonférentiellement pour fixation d'un crochet de rappel non représenté, attelant la première rondelle Belleville 4 au plateau de pression 3 ; la fixation desdits crochets (un par patte 91) est réalisée à l'aide de rivets 125, en variante des vis ou des boulons.

La première rondelle Belleville 4 s'appuie à sa périphérie externe sur le plateau de pression 3, comme décrit ci-dessous.

Cette rondelle 4 est inclinée, en direction du couvercle 8, sa concavité étant dirigée vers le plateau de pression 3.

La deuxième rondelle Belleville 6 s'appuie à sa périphérie externe sur un embouti 85, fractionné ou non, ménagé dans le fond 80 du couvercle 8 et dirigé axialement vers le plateau de pression 3. La deuxième rondelle Belleville 6 est inclinée en direction du plateau de pression 3, en sens inverse de la première rondelle 4, sa concavité étant dirigée vers le fond 80 du couvercle 8.

Les deux rondelles Belleville 4 et 6 ont ainsi en coupe une forme en V en étant en contact à leur périphérie interne avec un jonc annulaire 5 de transmission d'effort intercalé entre celles-ci.

Avantageusement, les rondelles 4 et 6 sont creusées localement pour recevoir le jonc 5. La face externe de ces rondelles 4 et 6 est rainurée pour maintien d'une pince 50 en forme de U dont les extrémités libres des branches sont d'orientation axiale. La pince 50 s'étend par son fond radialement en dessous des rondelles 4 et 6.

La pince 50, ici de forme annulaire, est élastique et: serre élastiquement les rondelles 4 et 6 au contact du jonc 5 en étant en contact par ses branches avec la face externe desdites rondelles. Cette pince peut en variante être fractionnée en clips. En fonction de l'inclinaison des rondelles 4 et 6, la pince s'ouvre ou se referme.

Le dispositif débrayeur 7 comprend un plateau transversal 41 portant à sa périphérie externe le jonc annulaire 5 de transmission d'effort; le plateau transversal 41 est relié par sa périphérie interne à un manchon 42 monté coulissant axialement.

Ce dispositif débrayeur 7 est prévu pour contrecarrer et surmonter à volonté l'action élastique des rondelles Belleville 4 et 6 en vue de desserrer à volonté les garnitures de friction 20, 21 et la friction d'embrayage 2 d'entre le plateau de pression 3 et le volant 1 afin de désengager l'embrayage.

Les rondelles Belleville 4 et 6 permettent de serrer lesdites garnitures 20, 21 entre le volant 1 et le plateau de pression 3 et constituent les moyens embrayeurs à action axiale sollicitant le plateau de pression en direction opposée au fond 80 du couvercle 8.

Le manchon 42 du dispositif débrayeur 7 peut être déplacé, en vue de l'opération de débrayage, dans un sens ou dans l'autre, c'est-à-dire dans le sens de la flèche F, l'embrayage étant du type tiré, ou de sens contraire à celui de la flèche F, l'embrayage étant du type poussé: ceci dépend du choix des caractéristiques relatives des première 4 et seconde 6 rondelles Belleville.

Plus précisément, dans les conditions décrites ci-après, l'une des rondelles Belleville assure le serrage de l'embrayage et est désignée ci-dessous par rondelle de serrage ; l'autre rondelle Belleville assure une assistance au débrayage et est désignée ci-dessous par rondelle d'assistance.

La rondelle de serrage, à la manière de la partie rondelle Belleville d'un diaphragme, est telle que la charge qu'elle procure croît avec la hauteur du tronc de cône qu'elle représente; la rondelle d'assistance est telle que la charge qu'elle procure, tout en étant bien entendu inférieure à celle que procure la rondelle de serrage, décroît avec la hauteur de son tronc de cône; les deux rondelles travaillant dans la zone de leur courbe caractéristique charge écrasement pratiquement linéaire, on voit qu'en choisissant des rondelles dont les courbes sont, dans ces zones, pratiquement parallèles, l'effort de débrayage, qui à chaque position du dispositif débrayeur est égal, ou proportionnel, à la différence des charges des rondelles, est faible et pratiquement constant ; en variante, si la raideur de la rondelle de serrage est plus grande que celle de la rondelle d'assistance, on peut obtenir un effort de débrayage faible mais croissant légèrement avec la course de débrayage. Ces courbes caractéristiques doivent bien entendu tenir compte de l'existence, quand il y en a, de l'effort dû aux moyens élastiques de progressivité 24 de la friction 2, et théoriquement de l'effort dû aux languettes élastiques 9 mais celui-ci est négligeable, ces efforts, comme on le sait, agissant dans le sens du débrayage et participant à l'assistance au débrayage. Pour plus de précisions, on se reportera au document WO 97/19275 (figure 4).

La figure 1 montre le cas d'un embrayage tiré, c'est-à-dire que le débrayage est obtenu en agissant, au niveau du manchon 42, dans le sens de la flèche F ; la seconde rondelle Belleville 6 est ici la rondelle d'assistance et la première rondelle 4 est la rondelle de serrage.

Sur la figure 1, l'embrayage est représenté embrayé sous la charge de la seconde rondelle Belleville 6, d'assistance, transmise au plateau de pression 3, via les moyens de transmission d'effort 5, ici en forme de jonc, par la première rondelle Belleville 4 de serrage en appui par sa périphérie externe sur les zones d'appui 114 décrites ci-dessous et par sa périphérie interne sur la butée annulaire 32.

Lors d'une action sur le manchon 42 dans le sens de la flèche F, la rondelle 6 est en quelque sorte comprimée, sa charge exercée augmentant et sa périphérie interne étant rapprochée du fond 80 du couvercle 8 ; cette compression est assistée par la rondelle de serrage 4 qui libère l'énergie emmagasinée, en position embrayée, sous l'effet de la rondelle 6, prépondérante, pendant l'opération d'embrayage. La course de compression de la rondelle 6 est limitée au niveau du dispositif débrayeur 7 ou, comme représenté, par un embouti 86 du fond 80 du couvercle avec lequel la rondelle 6 vient coopérer en fin d'opération de débrayage.

On comprendra aisément que pour réaliser un embrayage du type poussé, c'est-à-dire dans lequel l'opération de débrayage est obtenue en agissant sur le manchon 42 en sens inverse de celui de la flèche F, il suffit d'échanger les caractéristiques des rondelles 4 et 6 : selon cette variante, donc, non représentée, la première rondelle Belleville 4 est la rondelle d'assistance et 1a seconde rondelle Belleville 6 est la rondelle de serrage ; ici, en position embrayée, la rondelle 4 est à distance de la butée annulaire 32 et la rondelle 6 est en appui à 1a fois sur les emboutis 85 et 86 du fond 80 du couvercle 8 ; la butée annulaire 32 joue ici le rôle de limitation de course de débrayage.

Pour assurer une parfaite constance de l'effort de serrage, le mécanisme d'embrayage est équipé d'un dispositif de rattrapage d'usure tel que le dispositif 90 montré sur la figure 2; le dispositif 90 a été décrit en détails dans le document FR-A-2.753.503.

Le dispositif de rattrapage d'usure 90 comprend des moyens à rampes 111 disposées circonférentiellement constitués d'un anneau en tôle découpée et emboutie de façon à présenter des rampes disposées circonférentiellement ; ledit anneau présente également des zones d'appui 114 constituées par l'arête supérieure arrondie d'embouties en arcs de cercle centrés sur l'axe de l'embrayage et placés ici radialement à l'extérieur par rapport aux rampes. Le plateau de pression 3 présente, ici venus de moulage, sur sa face tournée vers le fond du couvercle 8, des plots 104 répartis circonférentiellement à une distance l'un de l'autre qui correspond à celle qui sépare circonférentiellement deux rampes successives, les plots 104 étant destinés à coopérer chacun avec une rampe.

Les moyens à rampes 111 sont placés axialement entre la première rondelle 4 et le plateau de pression 3 en sorte que les plots 104 reçoivent les rampes et la première rondelle 4 coopère avec les zones d'appui 114 qui constituent ainsi les moyens d'appui par l'intermédiaire desquels les rondelles 4 et 6 agissent sur le plateau de pression 3.

L'une des zones d'appui 114 des moyens à rampes 111 est prolongée à sa périphérie externe par un rebord parallèle à l'axe de l'embrayage se terminant selon un retour transversal, c'est-à-dire s'étendant dans un plan perpendiculaire à l'axe de l'embrayage, muni à sa périphérie d'une denture 118.

Le dispositif de rattrapage d'usure 90 comprend par ailleurs une roue à rochet 120 à dents inclinées solidaire d'un axe qui porte également une vis sans fin 113 ; le filet et le pas de la vis sans fin 113 sont adaptés à la denture 118 des moyens à rampes 111.

L'axe de la roue à rochet 120 est porté à rotation par un support 112, en tôle découpée et pliée, en forme de U ayant une âme et deux ailes destinées à supporter l'axe.

Le support 112 se prolonge extérieurement selon des bras en forme de L se terminant chacun par une extrémité en forme de C 130 par lesquelles le support 112 est fixé au couvercle par sertissage sur les bords d'une ouverture transversale 106 percée dans la paroi transversale du couvercle 2.

Le support 112 est adapté à recevoir un organe élastique 131 en forme générale de crosse dont chaque extrémité est munie d'un retour vers l'intérieur; plus précisément, la partie de plus grande longueur de la crosse porte en bout une languette de commande 135 ; la partie de plus petite longueur de la crosse a un retour 136, dit cliquet anti-retour, qui s'étend globalement parallèlement à la languette de commande 135 en étant à distance de celle-ci en sorte que, lorsque l'organe élastique 131 et la roue à rochet 120 sont montés dans le support 112, le cliquet anti-retour 136 et la languette de commande 135 coopèrent chacun avec un pied de dent, les deux dents concernées étant ici pratiquement diamétralement opposées.

Un ressort hélicoïdal de compression est placé entre la roue à rochet 120 et un bras du support 112, en étant enroulé autour de l'axe ; la vis sans fin 13 et la roue à rochet 20 sont taillées dans une même pièce.

Le ressort hélicoïdal constitue le moyen élastique de rattrapage; la roue à rochet 120 est au droit du cliquet anti-retour 136 qui, par coopération avec les dents 121 inclinées de la roue à rochet 120, empêche de tourner la roue à rochet 120, ainsi que la vis sans fin 113, dans le sens contraire à celui des aiguilles d'une montre, par rapport à la figure.

Le support 112, portant la roue à rochet 120, la vis sans fin 113 et le ressort hélicoïdal, étant solidaire du couvercle 8, la première rondelle 4 se déplace par rapport à lui lors des opérations de débrayage et de ré-embrayage ; la première rondelle 4 porte à sa périphérie un appendice radial dit actionneur 145 s'étendant radialement à l'extérieur pour coopérer avec l'organe élastique 131; on comprendra que, grâce à cette disposition, lors du basculement de la première rondelle 4 lors des opérations de débrayage et de ré-embrayage, l'actionneur 145 déplace de la droite vers la gauche, par rapport à la figure 2, la languette de commande 135 qui, par coopération avec les dents 121 de la roue à rochet 120, est amenée à faire tourner la roue à rochet 120 dans le sens horaire; lorsque l'actionneur 145, au retour, est déplacé vers la droite, l'élasticité de la languette 135 de l'organe élastique 131 et l'inclinaison des dents 121 font que cette languette 135 se déplace vers la droite en montant sur les dents 121 qui sont maintenues fixes en rotation par le cliquet anti-retour 136.

Le dispositif de rattrapage de jeu qui vient d'être succinctement décrit fonctionne comme expliqué dans la demande ci-dessus citée en référence; grâce au dispositif de rattrapage 90, les deux rondelles 4 et 6 gardent la même position, en position embrayée, quelle que soit l'usure des garnitures 20, 21.

Selon la variante de la figure 3, la seconde rondelle Belleville 6 est la partie périphérique externe d'un diaphragme 206 prolongée vers l'interieur par une partie centrale 207 fragmentée en doigts radiaux; le diaphragme 206 est monté articulé sur le couvercle 8 de manière classique grâce à des colonnettes 208, l'embrayage étant ici du type poussé.

Sur la figure 3, les pièces ou parties des pièces identiques à, ou jouant le même rôle que, celles de la variante précédente portent les mêmes références

Ici, c'est la seconde rondelle Belleville 6 qui porte l'actionneur 145, en forme d'appendice radial, pour actionner la languette de commande 135 de l'organe élastique 131 du dispositif de rattrapage d'usure 90; ici, le cliquet anti-retour 136 et la languette 135 sont disposées globalement orthogonalement; le support 112 et l'organe élastique 131 sont fixés au couvercle 8 par des rivets 200.

Ici, la première rondelle 4 et la seconde rondelle 6 sont inclinées dans le sens inverse par rapport à la variante des figures 1 et 2 et donc s'appuient l'une sur l'autre par leur périphérie externe. C'est au voisinage de sa partie médiane que la première rondelle 4 coopère avec les zones d'appui 114 de l'anneau en tôle des moyens à rampes 111 ; ici, ledit anneau présente un rebord axial cylindrique 214 dirigé vers le fond du couvercle 8 et centrant la première rondelle 4 par la périphérie interne de celle-ci; le flanc transversal 232 bordé, d'un côté, par les zones d'appui 114 et, de l'autre côté, par le rebord axial 214 limite le basculement de la première rondelle 4 lors du débrayage ; ici, la seconde rondelle 6 est la rondelle de serrage et la première rondelle 4 la rondelle d'assistance.

Selon une autre variante non représentée, la seconde rondelle est également, comme dans la variante de la figure 3, constituée par la partie périphérique externe d'un diaphragme prolongée vers l'intérieur par une partie centrale fragmentée en doigts radiaux par des fentes et l'embrayage est du type poussé.

Par rapport à la variante de la figure 3, ici des moyens de transmission d'effort sont prévus et comportent une jupe cylindrique annulaire à laquelle est rattaché intérieurement un jonc intercalé entre les rondelles 4 et 6 à leur périphérie externe; la jupe centre la première rondelle 4 par rapport à la seconde rondelle 6 elle-même positionnée par le diaphragme à laquelle elle appartient, le diaphragme étant positionné classiquement grâce à des colonnettes fixées au couvercle.

Ici, c'est la jupe qui, à sa partie externe côté couvercle, porte l'actionneur, en forme d'appendice radial, pour actionner la languette de commande 135 de l'organe élastique 131 du dispositif de rattrapage d'usure.

Ici, l'anneau en tôle des moyens à rampes 111, qui porte les dents 118, est centré à sa périphérie interne par un redent cylindrique ménagé dans le plateau de pression 3; ledit anneau présente, vers sa périphérie interne côté couvercle, les zones d'appui 114 avec lesquelles coopère la première rondelle 4 par sa périphérie interne.

Bien entendu, le dispositif de rattrapage d'usure peut avoir une autre forme, par exemple de type de celle décrit dans le document FR-A-2 424 442, l'actionneur agissant alors sur un tambour actionnant la vis sans fin.

## Revendications

1. Mécanisme d'embrayage pour embrayage à friction, comportant un couvercle (8) de forme creuse avec un fond (80) d'orientation transversale et des moyens de fixation (81) pour fixation du mécanisme d'embrayage sur un volant d'entraînement (1) en rotation, un plateau de pression (3) présentant frontalement une face de friction (30) pour coopération avec une friction d'embrayage (2), des languettes élastiques (9) pour liaison en rotation, avec mobilité axiale, du plateau de pression (3) avec le couvercle (8), et, interposés entre la face dorsale (36) du plateau de pression (3) et le fond (80) du couvercle (8), d'une part, des moyens élastiques embrayeurs à action axiale (4, 6) comportant deux rondelles Belleville (4,6) montées en série entre le plateau de pression (3) et le couvercle (8), et sollicitant axialement le plateau de pression (8) en direction opposée du fond (80) du couvercle (8) et, d'autre part, un dispositif débrayeur (7) pour contrecarrer à volonté l'action desdits moyens élastiques embrayeurs (4, 6), **caractérisé par le fait que** lesdites rondelles Belleville (4, 6) sont inclinées en sens inverse, le mécanisme d'embrayage étant équipé d'un dispositif de rattrapage d'usure (90) d'au moins des garnitures de la friction d'embrayage (2) actionné par les moyens élastiques embrayeurs (4, 6), ledit dispositif de rattrapage d'usure (90) comportant des moyens à rampes (111) présentant des rampes disposées circonférentiellement et des zones d'appui (114), l'une (4) des rondelles Belleville (4, 6), dite première rondelle Belleville, étant en contact avec les zones d'appui (114), tandis que l'autre (6) des rondelles Belleville (4, 6), dite seconde rondelle Belleville, s'appuie sur le couvercle (8).

2. Mécanisme selon la revendication 1, **caractérisé par le fait que** la première rondelle Belleville (4) est en contact par sa périphérie externe avec les zones d'appui (114) tandis que la seconde rondelle Belleville (6) s'appuie par sa périphérie externe sur le couvercle (8). 19

3. Mécanisme selon la revendication 2, **caractérisé par le fait que** des moyens de transmission d'effort (5) sont intercalés entre les périphéries internes des première (4) et seconde (6) rondelles Belleville, les moyens de transmission d'effort (5) étant portés par le dispositif débrayeur (7).

4. Mécanisme selon la revendication 1, **caractérisé par le fait que** la première rondelle Belleville (4) est en contact par sa partie médiane avec les zones d'appui (114) tandis que la seconde rondelle Belleville (6) s'appuie par sa périphérie interne sur le couvercle (8).

5. Mécanisme selon la revendication 1, **caractérisé par le fait que** la première rondelle Belleville (4) est en contact par sa périphérie interne avec les zones d'appui (114) tandis que la seconde rondelle Belleville (6) s'appuie par sa périphérie interne sur le couvercle (8).

6. Mécanisme selon la revendication 1, **caractérisé par le fait que** le dispositif de rattrapage d'usure (90) est actionné par la première rondelle Belleville (4).

7. Mécanisme selon la revendication 1, **caractérisé par le fait que** le fond (80) du couvercle (8) porte une butée (86) pour limiter l'inclinaison de la seconde rondelle Belleville (6).

8. Mécanisme selon la revendication 4, **caractérisé par le fait que** le dispositif de rattrapage d'usure (90) est actionné par la seconde rondelle Belleville (6).

9. Mécanisme selon la revendication 8 ou 5, **caractérisé par le fait que** la seconde rondelle Belleville (6) est la partie periphérique externe d'un diaphragme (206) prolongée vers l'intérieur par une partie centrale (207) fragmentée en doigts radiaux par des fentes.

10. Mécanisme selon la revendication 9, en combinaison avec la revendication 5, **caractérisé par le fait que** des moyens de transmission d'effort sont intercalés entre les périphéries externes des première (4) et seconde (6) rondelles Belleville.

11. Mécanisme selon la revendication 10, **caractérisé par le fait que** le dispositif de rattrapage d'usure est actionné par les moyens de transmission d'effort.

12. Mécanisme selon la revendication 1, **caractérisé par le fait que** la seconde rondelle Belleville (6) est choisie pour exercer une action prépondérante par rapport à la première rondelle Belleville (4).

13. Mécanisme selon la revendication 12, **caractérisé par le fait que** la raideur de la seconde rondelle Belleville (6) est supérieure à la raideur de la première rondelle Beileville (4).

14. Mécanisme selon la revendication 13, **caractérisé par le fait que** la seconde rondelle Belleville (6) développe une charge maximum supérieure en valeur absolue à celle développée par la première rondelle Belleville (4).

## Patentansprüche

1. Kupplungsmechanismus für eine Reibungskupplung, umfassend einen hohlförmigen Deckel (8) mit einem quer ausgerichteten Boden (80) und Befestigungsmitteln (81) zur Befestigung des Kupplungsmechanismus an einem Drehantriebsschwungrad (1), eine Druckplatte (3), die stimseitig eine Reibfläche (30) für das Zusammenwirken mit einer Reibungskupplungsscheibe (2) aufweist, elastische Zungen (9) für eine axial bewegliche, drehfeste Verbindung der Druckplatte (3) mit dem Deckel (8) und, eingefügt zwischen der rückseitigen Fläche (36) der Druckplatte (3) und dem Boden (80) des Deckels (8), einerseits axial wirksame elastische Einrückmittel (4, 6), die zwei zwischen der Druckplatte (3) und dem Deckel (8) in Reihe angeordnete Tellerfedern (4, 6) umfassen, und die die Druckplatte (3) in entgegengesetzter Richtung zum Boden (80) des Deckels (8) axial beaufschlagen, sowie andererseits eine Ausrückvorrichtung (7), um der Wirkung der besagten elastischen Einrückmittel (4, 6) beliebig entgegenzuwirken, **dadurch gekennzeichnet, dass** die Tellerfedern (4, 6) in entgegengesetzter Richtung geneigt sind, wobei der Kupplungsmechanismus mit einer Verschleißnachstellvorrichtung (90) für mindestens einen der Reibbeläge der Reibungskupplungsscheibe (2) ausgerüstet ist, die durch die elastischen Einrückmittel (4, 6) betätigt wird, wobei die besagte Verschleißnachstellvorrichtung (90) Rampenmittel (111) umfasst, die umfangsmäßig angeordnete Rampen und Auflagebereiche (114) aufweist, wobei eine (4) der Tellerfedern (4, 6), die als erste Tellerfeder bezeichnet wird, mit den Auflagebereichen (114) in Kontakt kommt, während die andere (6) der Tellerfedern (4, 6), die als zweite Tellerfeder bezeichnet wird, auf dem Deckel (8) anliegt.

2. Mechanismus nach Anspruch 1, **dadurch gekennzeichnet, dass** die erste Tellerfeder (4) durch ihren äußeren Umfang mit den Auflagebereichen (114) in Kontakt kommt, während die zweite Tellerfeder (6) mit ihrem äußeren Umfang an dem Deckel (8) anliegt.

3. Mechanismus nach Anspruch 2, **dadurch gekennzeichnet, dass** Kraftübertragungsmittel (5) zwischen den inneren Umfängen der ersten (4) und zweiten (6) Tellerfedern eingefügt sind, wobei die Kraftübertragungsmittel (5) an der Ausrückvorrichtung (7) angebracht sind.

4. Mechanismus nach Anspruch 1, **dadurch gekennzeichnet, dass** die erste Tellerfeder (4) durch ihren Mittelteil mit den Auflagebereichen (114) in Kontakt kommt, während die zweite Tellerfeder (6) mit ihrem inneren Umfang an dem Deckel (8) anliegt.

5. Mechanismus nach Anspruch 1, **dadurch** die erste Tellerfeder (4) durch ihren inneren Umfang mit den Auflagebereichen (114) in Kontakt kommt, während die zweite Tellerfeder (6) mit ihrem inneren Umfang an dem Deckel (8) anliegt.

6. Mechanismus nach Anspruch 1, **dadurch gekennzeichnet, dass** die Verschleißnachstellvorrichtung (90) durch die erste Tellerfeder (4) betätigt wird.

7. Mechanismus nach Anspruch 1, **dadurch gekennzeichnet, dass** der Boden (80) des Deckels (8) einen Anschlag (86) trägt, um die Neigung der zweiten Tellerfeder (6) zu begrenzen.

8. Mechanismus nach Anspruch 4, **dadurch gekennzeichnet, dass** die Verschleißnachstellvorrichtung (90) durch die zweite Tellerfeder (6) betätigt wird.

9. Mechanismus nach Anspruch 8 oder 5, **dadurch gekennzeichnet, dass** die zweite Tellerfeder (6) der äußere Umfangsteil einer Membranfeder (206) ist, der nach innen durch einen Mittelteil (207) verlängert wird, der durch Schlitze in radiale Finger unterteilt ist.

10. Mechanismus nach Anspruch 9 in Kombination mit Anspruch 5, **dadurch gekennzeichnet, dass** Kraftübertragungsmittel zwischen den äußeren Umfängen der ersten (4) und zweiten (6) Tellerfedern eingefügt sind.

11. Mechanismus nach Anspruch 10, **dadurch gekennzeichnet, dass** die Verschleißnachstellvorrichtung durch die Kraftübertragungsmittel betätigt wird.

12. Mechanismus nach Anspruch 1, **dadurch gekennzeichnet, dass** die zweite Tellerfeder (6) so gewählt wird, dass sie eine vorherrschende Wirkung im Verhältnis zur ersten Tellerfeder (4) ausübt.

13. Mechanismus nach Anspruch 12, **dadurch gekennzeichnet, dass** die Steifigkeit der zweiten Tellerfeder (6) größer als die Steifigkeit der ersten Tellerfeder (4) ist.

14. Mechanismus nach Anspruch 13, **dadurch** die zweite Tellerfeder (6) eine maximale Belastung entwickelt, die nach dem Absolutwert größer als die durch die erste Tellerfeder (4) entwickelte Belastung ist.

## Claims

1. Clutch mechanism for a friction clutch, comprising a hollow-shaped cover (8) with a transversely oriented bottom (80) and fixing means (81) for fixing the clutch mechanism to a flywheel (1) for driving in rotation, a pressure plate (3) having a friction face (30) at the front for cooperation with a clutch friction lining (2), elastic tongues (9) for rotational connection, with axial mobility, of the pressure plate (3) to the cover (8), and, interposed between the dorsal face (36) of the pressure plate (3) and the bottom (80) of the cover (8), firstly axially-acting elastic engagement means (4, 6) comprising two Belleville washers (4, 6) mounted in series between the pressure plate (3) and the cover (8) and axially forcing the pressure plate (8) in the opposite direction to the bottom (80) of the cover (8) and secondly a disengagement device (7) for intentionally counteracting the action of the said elastic engagement means (4, 6), **characterised by** the fact that the said Belleville washers (4, 6) are inclined in opposite directions, the clutch mechanism being equipped with a device (90) for taking up wear on at least the clutch friction linings (2) actuated by the elastic engagement means (4, 6), the said wear take-up device (90) comprising ramp means (111) having ramps disposed circumferentially and abutment areas (114), one (4) of the Belleville washers (4, 6), referred to as the first Belleville washer, being in contact with the abutment areas (114), whilst the other one (6) of the Belleville washers (4, 6), referred to as the second Belleville washer, bears on the cover (8).

2. Mechanism according to Claim 1, **characterised by** the fact that the first Belleville washer (4) is in contact through its external periphery with the abutment areas (114) whilst the second Belleville washer (6) bears through its external periphery on the cover (8).

3. Mechanism according to Claim 2, **characterised by** the fact that force transmission means (5) are interposed between the internal peripheries of the first (4) and second (6) Belleville washers, the force transmission means (5) being carried by the disengagement device (7).

4. Mechanism according to Claim 1, **characterised by** the fact that the first Belleville washer (4) is in contact through its middle part with the abutment areas (114) whilst the second Belleville washer (6) bears through its internal periphery on the cover (8).

5. Mechanism according to Claim 1, **characterised by** the fact that the first Belleville washer (4) is in contact through its internal periphery with abutment areas (114) whilst the second Belleville washer (6) bears through its internal periphery on the cover (8).

6. Mechanism according to Claim 1, **characterised by** the fact that the wear take-up device (90) is actuated by the first Belleville washer (4).

7. Mechanism according to Claim 1, **characterised by** the fact that the bottom (80) of the cover (8) carries a stop (86) for limiting the inclination of the second Belleville washer (6).

8. Mechanism according to Claim 4, **characterised by** the fact that the wear take-up device (90) is actuated by the second Belleville washer (6).

9. Mechanism according to Claim 8 or 5, **characterised by** the fact that the second Belleville washer (6) is the external peripheral part of a diaphragm (206) extended inwards by a central part (207) divided into radial fingers by slots.

10. Mechanism according to Claim 9 in combination with Claim 5, **characterised by** the fact that force transmission means are interposed between the external peripheries of the first (4) and second (6) Belleville washers.

11. Mechanism according to Claim 10, **characterised by** the fact that the wear take-up device is actuated by the force transmission means.

12. Mechanism according to Claim 1, **characterised by** the fact that the second Belleville washer (6) is chosen so as to exert a preponderant action with respect to the first Belleville washer (4).

13. Mechanism according to Claim 12, **characterised by** the fact that the stiffness of the second Belleville washer (6) is greater than the stiffness of the first Belleville washer (4).

14. Mechanism according to Claim 13, **characterised by** the fact that the second Belleville washer (6) develops a maximum load which is greater in absolute value than that developed by the first Belleville washer (4).
